# EUROPÄISCHE PATENTSCHRIFT

(11) **EP 4 119 888 B1**
(45) Veröffentlichungstag und Bekanntmachung des Hinweises auf die Patenterteilung: **03.06.2026**
(21) Anmeldenummer: 21185160.5
(22) Anmeldetag: 12.07.2021
(51) Int. Cl.: G01B 3/22, G01B 5/06, F16K 37/00, F24D 19/10

(54) **MESSVORRICHTUNG ZUR BESTIMMUNG EINES SCHLIESSMASSES EINES STELLVENTILS EINES HEIZKREISVERTEILERS ODER EINES RADIATORS**
MEASURING DEVICE FOR DETERMINING A CLOSING HEIGHT OF A CONTROL VALVE OF A HEATING CIRCUIT DISTRIBUTOR OR OF A RADIATOR
DISPOSITIF DE MESURE POUR DÉTERMINER UNE COTE DE FERMETURE D'UNE VANNE DE RÉGLAGE D'UN RÉPARTITEUR DE CIRCUIT DE CHAUFFAGE OU D'UN RADIATEUR

(43) Veröffentlichungstag der Anmeldung: 18.01.2023
(73) Patentinhaber: Eazy Systems GmbH, 38229 Salzgitter (DE)
(72) Erfinder: SEELMANN, Florian, 31188 Holle (DE); BEIE, Lars, 31061 Alfeld (DE)
(74) Vertreter: Holz, Christian

(56) Entgegenhaltungen:
- DE-U1- 202009 016 394
- JP-A- 2019 100 442
- JP-A- H11 153 401
- KR-B1- 101 103 056
- US-A- 5 077 909

## Beschreibung

Die vorliegende Erfindung betrifft eine Messvorrichtung zur Bestimmung eines Schließmaßes eines Stellventils eines Heizkreisverteilers oder eines Radiators gemäß des Patentanspruchs 1, ein Messsystem mit einer derartigen Messvorrichtung und mit einem derartigen Adapter gemäß des Patentanspruchs 9 sowie ein Verfahren zur Bestimmung eines Schließmaßes eines Stellventils eines Heizkreisverteilers oder eines Radiators gemäß des Patentanspruchs 10.

Für verschiedene technische Anwendungen kann es erforderlich sein, den Durchfluss eines Fluids durch eine Fluidleitung zu regulieren. Hierfür können sogenannte Stellventile verwendet werden, welche auch als Regelarmaturen bezeichnet werden können. Das Stellventil kann zwischen einer vollkommen geöffneten und einer vollkommen geschlossenen Stellung stufenlos eingestellt werden und so den Durchfluss des Fluids durch sich hindurch verändern. Hierdurch können je nach technischer Anwendung zum Beispiel der Druck, die Temperatur oder die Durchflussmenge beeinflusst werden. Derartige Fluide können Gase sowie Flüssigkeiten sein. Derartige Stellventile können beispielsweise in Gebäuden bei

Warmwasserheizungsanlagen sowie in der Gebäudeleittechnik verwendet werden. Mit anderen Worten können derartige Stellventile in der Heizungs-, Klima- und bzw. oder Lüftungstechnik eingesetzt werden. Die Veränderung der Einstellung des Stellventils kann mittels eines Antriebs erfolgen, welcher entsprechend als Stellantrieb bezeichnet und zum Beispiel elektrisch oder pneumatisch betrieben werden kann.

Zur Regulierung der Temperatur einzelner Räume eines Gebäudes können derartige Stellventile bei Fußbodenheizungen als die Ventile des Heizkreisverteilers verwendet werden. Einzelne Stellventile können auch bei einem jeweiligen Heizkörper bzw. Radiator als dessen Ventil eingesetzt werden. Entsprechend dieser Anwendung können derartige Stellventile auch als thermische Stellventile und deren Antriebe entsprechend als thermische Stellantriebe bezeichnet werden. In beiden Fällen sind die Stellventile mit einem Fluidkreislauf in Form des Rücklaufs des Heizungskreislaufs verbunden, um je nach Ventilstellung, welche mittels des thermischen Stellantriebs eingenommen werden kann, eine vorbestimmte Menge des Heizungswassers in den Heizkörper bzw. in die Rohre eines Abschnitts der Fußbodenheizung einströmen zu lassen. Die Stellung des Stellventils kann hierzu mittels des jeweiligen Stellantriebs von einem Thermostat in Abhängigkeit einer erfassten Raumtemperatur vorgegeben werden, sodass eine vom Benutzer vorgegebene Solltemperatur des Raums erreicht und eingehalten werden kann.

Bei der Montage derartiger Stellantriebe an einem Ventil zum Beispiel einer derartigen Heizungsanlage ist zu bedenken, dass das Stellventil und das Rohr als Fluidleitung der Heizungsanlage üblicherweise nicht vom selben Hersteller stammen wie die Stellantriebe. Stellen Stellantriebe eher mechatronische bzw. elektronische Komponenten zum Beispiel mit einem elektrischen Antrieb dar, so sind die Stellventile und Rohrleitungen eher dem Sanitärbereich als rein mechanische Bauteile zuzuordnen. Entsprechend ist eine Kompatibilität des Stellantriebs mit dem Stellventil, jeweils unabhängig vom Hersteller, erforderlich, um ein Zusammenwirken von Stellantrieb und Stellventil gewährleisten zu können.

Daher ist es bekannt, unterschiedliche Adapter als mechanische Schnittstelle vorzusehen, welche zwischen dem jeweils unterschiedlichen Stellventil und einem einheitlichen Stellantrieb angeordnet werden können, um das Stellventil und den Stellantrieb herstellerunabhängig miteinander zu verbinden und bestimmungsgemäß zusammenwirken zu lassen. Auf diese Weise sind lediglich unterschiedliche Adapter für die unterschiedlichen am Markt üblichen Stellventile vorzusehen. Der Stellantrieb hingegen kann einheitlich passend zu dem Adapter ausgebildet werden. Dies kann es vermeiden, für die unterschiedlichen am Markt verfügbaren Stellventile jeweils einen passenden Stellantrieb vorzusehen, was zu einer erheblichen Variantenvielfalt der Stellantriebe mit entsprechenden Kosten führen würde. Eine Anordnung zur Befestigung eines Stellelements an einem Ventil ist beispielsweise dem DE 201 09 774 U1 zu entnehmen.

Hinsichtlich der Funktionsweise derartiger Stellantriebe und Ventile ist dabei zu beachten, dass üblicherweise das Ventil eine vergleichsweise schwache Ventilfeder bzw. Rückstellfeder aufweist, mittels dessen Federkraft ein Stößel des Ventils entlang derselben Längsachse bewegt und hierdurch das Ventil fluidführend geöffnet werden kann. Der Federkraft der Rückstellfeder des Ventils wirkt dabei eine vergleichsweise starke Druckfeder des Stellantriebs entgegen, sodass das Ventil grundsätzlich, d. h. im Normalzustand, von dem Stellantrieb geschlossen wird. Der Stellantrieb weist ferner ein Stellelement auf, welches bei Betätigung eine zusätzliche Kraft auf die Druckfeder des Stellantriebs ausüben und hierdurch die Bewegung der Rückstellfeder des Ventils unterstützen kann. Somit können bei Betätigung des Stellelements das Stellelement des Stellantriebs und die Rückstellfeder des Ventils gemeinsam die vergleichsweise starke Federkraft der Druckfeder des Stellantriebs überwinden und hierdurch das Ventil öffnen. Das Stellelement des Stellantriebs kann beispielsweise mittels eines elektrischen Heizwiderstands in Kombination mit einem temperaturabhängigen Dehnkörper umgesetzt werden, siehe DE 31 40 472 C2.

Vorteilhaft ist hierbei die vergleichsweise einfache und bzw. oder kompakte Umsetzung der Ausübung der Antriebskraft bzw. der Stellkraft des Stellantriebs. Dies kann die Kosten und bzw. oder den Bauraum des Stellantriebs geringhalten.

Vorteilhaft ist insbesondere daran, dass die Federkraft der Druckfeder des Stellantriebs größer als die Federkraft der Rückstellfeder des Ventilelements ist, dass bei einem unbetätigten bzw. unbestromten Stellelement des Stellantriebs das Ventil in der Normalstellung geschlossen ist. Wird davon ausgegangen, dass in der meisten Zeit der Nutzung zum Beispiel einer Heizungsanlage kein Wärmebedarf besteht, so kann dadurch, dass das Ventil im Normalzustand geschlossen ist ("normally closed", NC) und der Heizwiderstand des Stellelements des Stellantriebs stromlos bleibt, der Energieverbrauch des Stellantriebs geringgehalten werden.

Der Ventilstößel kann somit mittels der Rückstellfeder des Ventils in Kombination mit der Druckfeder des Stellantriebs und des Stellelements des Stellantriebs entlang der Längsachse des Ventils, welche mit der Längsachse des Stellantriebs zusammenfällt, bewegt werden, wie zuvor beschrieben. Dabei ist die Position des Ventilstößels bei geschlossenem Ventil von besonderem Interesse, da ein am Ventil zu verwendender Stellantrieb entsprechend eingestellt werden muss, um das Öffnen und Schließen des Ventils wie zuvor beschrieben zu bewirken, d.h. der Stellantrieb muss bei unbetätigtem Stellelement mit seinem Stellelement genau an der Oberkante des Ventilstößels bei geschlossenem Ventil anliegen, um zum Öffnen des Ventils seinen vollen Stellweg ausnutzen sowie um das Ventil vollständig schließen zu können. Dieses Maß des Ventilstößels wird als Schließmaß bezeichnet und ist als der Abstand, bei geschlossenem Ventil mit einer definierten Schließkraft von z.B. 100 N, zwischen der Oberkante des Ventilstößels und der Auflagefläche des Anschlussgewindes des Ventils definiert.

Um ein sicheres Schließen von Ventilen bei der Installation von z.B. Heizungsanlagen durch ein Stellelement eines Stellantriebs wie beispielsweise eines elektrothermischen Stellantriebes, eines motorischen Stellantriebes oder eines Thermostatkopfes zu erreichen, ist es somit notwendig, das Schließmaß des entsprechenden Ventils zu ermitteln. Da es nämlich keine gültige Norm für die Größe des Anschlussgewindes und für das Schließmaß von derartigen Ventilen gibt, sind von verschiedenen Herstellern Ventile mit unterschiedlichen Abmessungen bzw. Schließmaßen erhältlich.

Das Schließmaß eines bestimmten Ventils lässt sich zwar in einer Werkstatt oder in einem Messlabor mit entsprechenden Messvorrichtungen relativ einfach ermitteln. Bei bereits in z.B. Heizungsanlagen montierten Ventilen, oder falls keine Messvorrichtungen vorhanden sind, ist es jedoch sehr schwierig, das Schließmaß eines bestimmten Ventils mit der erforderlichen Genauigkeit zu ermitteln.

Eine Aufgabe der vorliegenden Erfindung ist es, eine Möglichkeit zur Bestimmung des Schließmaßes eines Stellventils bereit zu stellen, so dass das Schließmaß des Stellventils, insbesondere im verbauten Zustand, möglichst einfach, schnell, kostengünstig, bauraumsparend und bzw. oder benutzerfreundlich bestimmt, insbesondere optisch abgelesen, werden kann. Dies soll insbesondere für ein Stellventil eines Heizkreisverteilers oder eines Radiators erfolgen.

Die Aufgabe wird erfindungsgemäß durch eine Messvorrichtung mit den Merkmalen des Patentanspruchs 1, durch ein Messsystem mit den Merkmalen des Patentanspruchs 9 sowie durch ein Verfahren mit den Merkmalen des Patentanspruchs 10 gelöst. Vorteilhafte Weiterbildungen sind in den Unteransprüchen beschrieben.

Somit betrifft die vorliegende Erfindung eine Messvorrichtung zur Bestimmung eines Schließmaßes eines Stellventils eines Heizkreisverteilers oder eines Radiators, mit einem Gehäuse, welches ausgebildet ist, direkt oder indirekt an dem Stellventil gehalten zu werden, mit einem Messstößel, welcher gegenüber dem Gehäuse entlang einer Längsachse beweglich ist, und mit einem Federelement, welches ausgebildet ist, ein Ende des Messstößels gegenüber dem Gehäuse mit einer Messkraft gegen eine Oberkante eines Ventilstößels des Stellventils zu drücken, wobei die Messkraft des Federelements der Messvorrichtung größer als eine Federkraft einer Rückstellfeder des Stellventils ist und wobei ein gegenüberliegendes Ende des Messstößels ausgebildet ist, das Schließmaß des Stellventils gegenüber einem Bezugspunkt zu bestimmen.

Im Allgemeinen versteht man unter einem Stellventil ein Ventil, welches dazu ausgebildet ist, mittels eines Antriebs, welcher auch als Stellantrieb bezeichnet werden kann, hinsichtlich seiner Durchflussöffnung bzw. seiner Durchflussmenge verstellt bzw. reguliert zu werden. Ein derartiges Stellventil kann im Rahmen der Erfindung bei einem Heizkreisverteiler oder einem Radiator wie eingangs beschrieben verwendet werden, um einen Fluidstrom wie Heizungswasser zwischen verschiedenen Strängen beispielsweise einer Fußbodenheizung aufzuteilen bzw. zu regulieren.

Das Gehäuse kann grundsätzlich allgemein als Gestell bzw. als Körper der Messvorrichtung verstanden werden, welches eine haltende Verbindung zwischen den weiteren Komponenten der Messvorrichtung und dem Stellventil bewirken kann. Vorzugsweise kann das Gehäuse im Sinne einer Einhausung zumindest einige Komponenten der Messvorrichtung in sich aufnehmen bzw. umschließen, um diese zu schützen und bzw. oder zu halten, was die Anzahl der Komponenten der Messvorrichtung geringhalten kann.

Der Messstößel kann mit seinem einen, dem Stellventil zugewandten, Ende zum berührenden bzw. zum drückenden Kontakt mit der Oberkante des Ventilstößels des Stellventils und mit seinem entlang der Längsachse gegenüberliegenden anderen, dem Stellventil abgewandten, Ende zum Bestimmen des Schließmaßes des Stellventils gegenüber einem Bezugspunkt ausgebildet sein. Hierzu kann eine Person als Benutzer der Messvorrichtung ein weiteres Messgerät wie beispielsweise einen Meterstab, ein Lineal oder einen Metallmaßstab an den Messstößel anlegen und den Abstand zwischen dem entsprechenden Ende des Messstößels und dem Bezugspunkt ablesen. Dies kann auch mittels einer Schieblehre bzw. eines Messschiebers erfolgen. Das entsprechende, dem Stellventil abgewandte Ende des Messstößels kann auch selbst eine Messskala, beispielsweise wie ein Meterstab, ein Lineal oder ein Metallmaßstab, aufweisen, was ein direktes optisches Ablesen des Schließmaßes ermöglichen kann. Dieser Bezugspunkt kann vorzugsweise der Gehäuseoberkante sein, was die Umsetzung besonders einfach, platzsparend und bzw. oder intuitiv verwendbar machen kann.

Die Verwendung der erfindungsgemäßen Messvorrichtung kann derart erfolgen, dass im nicht-montierten Zustand der Messvorrichtung der Messstößel von der Federkraft des Federelements gegenüber dem Gehäuse derart entlang der Längsachse gedrückt wird, dass das zum Bestimmen des Schließmaßes des Stellventils dienende, d.h. das dem Stellventil abgewandte, Ende des Messstößels gegenüber dem Bezugspunkt auf Null bewegt wird. Auch kann dieses Ende im nicht-montierten Zustand der Messvorrichtung geringfügig, beispielsweise einige Millimeter, gegenüber dem Bezugspunkt in der dem Stellventil abgewandten Richtung entlang der Längsachse versetzt sein, da derartig geringe Werte für das Schließmaß unüblich sein können. In jedem Fall kann der Bezugspunkt vorzugsweise entsprechend am Gehäuse zum Beispiel als farbige und bzw. oder haptische Markierung angebracht oder das Gehäuse selbst kann als Bezugspunkt ausgebildet sein, wie weiter unten noch näher beschrieben werden wird.

Wird nun die Messvorrichtung auf dem Stellventil montiert, so kommt der Messstößel der Messvorrichtung mit dem Ventilstößel des Stellventils in berührenden Kontakt. Wird die Montage der Messvorrichtung auf dem Stellventil fortgesetzt, drücken das Federelement des Messstößels der Messvorrichtung und der Ventilstößel des Stellventils entlang der Längsachse gegeneinander. Da die Federkraft des Federelements des Messstößels der Messvorrichtung mit beispielsweise 100 N deutlich größer als die Federkraft des Ventilstößels des Stellventils mit beispielsweise 30 N ist, wird der Ventilstößel des Stellventils hierdurch eingedrückt, wie dies im Betrieb durch die Druckfeder der Stellantriebs erfolgt.

Ist die Messvorrichtung vollständig auf dem Stellventil montiert, so ist das Federelement des Messstößels der Messvorrichtung sowie der Messstößel der Messvorrichtung selbst derart dimensioniert, dass in diesem Zustand das Stellventil vollständig geschlossen ist, wie es zur Bestimmung des Schließmaßes des Stellventils erforderlich ist. Da die Rückstellfeder des Stellventils somit vollständig eingedrückt ist, wirkt der Ventilstößel des Stellventils nun als "harter" Anschlag, so dass beim Abschluss der Montage der Messvorrichtung auf dem Stellventil das dem Stellventil abgewandte und zum Bestimmen des Schließmaßes des Stellventils ausgebildete Ende des Messstößels entlang der Längsachse vom Stellventil weggedrückt wird, bis die Messvorrichtung vollständig auf dem Stellventil befestigt ist, beispielsweise vollständig aufgeschraubt ist. Im vollständig montierten Zustand der Messvorrichtung auf dem Stellventil kann somit das Schließmaß des Stellventils am Abstand entlang der Längsachse zwischen dem zum Bestimmen des Schließmaßes des Stellventils ausgebildeten Endes des Messstößels und dem Bezugspunkt, vorzugsweise des Gehäuses, vom Benutzer abgelesen werden. Mit anderen Worten kann sozusagen die Oberkante des Messstößels einem "Nullpunkt" entsprechen, welcher durch die Montage der Messvorrichtung auf dem Stellventil gegenüber dem Bezugspunkt so positioniert werden kann, dass der Abstand zwischen der Oberkante des Messstößels und dem Bezugspunkt dem zu bestimmenden Schließmaß entspricht.

Eine entsprechende Dimensionierung der Messvorrichtung bzw. des Gehäuses der Messvorrichtung gegenüber dem Stellventil, sodass das Schließmaß im vollständig montierten Zustand wie zuvor beschrieben ablesbar ist, kann in Kenntnis des jeweiligen Stellventils erfolgen, sodass pro Typ von Stellventil eines Herstellers bzw. unterschiedlicher Hersteller eine entsprechende Messvorrichtung ausgelegt werden kann, welche dann zur Bestimmung des Schließmaßes genau dieses Typs von Stellventil bei direkter Montage verwendet werden kann. Alternativ kann auch ein Adapter zwischen Messvorrichtung und Stellventil verwendet werden, wie weiter unten noch näher beschrieben werden wird, sodass eine einheitliche Messvorrichtung mit unterschiedlichen Adaptern an unterschiedlichen Stellventilen derart verwendet werden kann, dass jeweils die Bestimmung der Schließmaßes genau dieses Typs von Stellventil bei indirekter Montage mittels des jeweiligen Adapters erfolgen kann.

In jedem Fall kann erfindungsgemäß erreicht werden, dass mittels der erfindungsgemäßen Messvorrichtung das individuelle Schließmaß genau des entsprechenden Typs von Stellventil bestimmt und von der Person bestimmt, insbesondere mittels zum Beispiel eines Lineals oder Messschiebers oder optisch direkt von einer Messskala abgelesen, werden kann. Dies kann entsprechend schnell, einfach, kostengünstig und bzw. oder intuitiv umsetzbar erfolgen. Insbesondere kann dies im montierten Zustand des Stellventils am Heizkreisverteiler erfolgen. Das bestimmte Schließmaß kann nun zur Einstellung des Stellantriebs verwendet werden, wie eingangs beschrieben. Dies kann die korrekte bzw. optimale Verwendung des Stellantriebs ermöglichen.

Das Stellventil ist ein Stellventil eines Heizkreisverteilers oder eines Radiators. Entsprechend ist die erfindungsgemäße Messvorrichtung ausgebildet, bei genau dieser Art von Stellventilen verwendet zu werden, um die eingangs beschriebenen Nachteile gerade bei derartigen Anwendungen zu reduzieren bzw. zu überwinden.

Gemäß einem Aspekt der Erfindung ist der Messstößel innerhalb des Gehäuses und durch eine Durchgangsöffnung des Gehäuses hindurch entlang der Längsachse beweglich angeordnet. Mit anderen Worten kann in diesem Fall das Gehäuse als Einhausung wenigstens des Messstößels und vorzugsweise auch des Federelements sowie des Messstößels ausgebildet sein, um diese vor Berührung der Person von außen, vor Beschädigung, vor Verschmutzung und dergleichen zu schützen. Auch kann dies die Handhabung der Messvorrichtung für die Person vereinfachen.

Gemäß einem weiteren Aspekt der Erfindung wird der Bezugspunkt durch eine Oberkante des Gehäuses, vorzugsweise durch eine Oberkante der Durchgangsöffnung des Gehäuses, gebildet. Hierdurch kann ein besonders einfach, deutlich sowie intuitiv ablesbarer Bezugspunkt geschaffen werden. Insbesondere kann auf zusätzliche Komponenten der Messvorrichtung zur Ausbildung eines Bezugspunkts verzichtet werden, was den Aufwand der Herstellung geringhalten sowie Bauraum sparen kann.

Gemäß einem weiteren Aspekt der Erfindung weist das gegenüberliegende Ende des Messstößels eine Messskala auf, welche ausgebildet ist, das Schließmaß des Stellventils gegenüber dem Bezugspunkt anzuzeigen. Hierzu kann die Messskala beispielsweise wie die Maßangaben eines Meterstabs, Lineals oder Metallmaßstabs ausgebildet sein, wie zuvor bereits erwähnt, was dem Benutzer ein besonders intuitives Ablesen des Schließmaßes ermöglichen kann.

Gemäß einem weiteren Aspekt der Erfindung ist das gegen die Oberkante des Ventilstößels des Stellventils drückende Ende des Messstößels als Messteller ausgebildet, wobei das Federelement der Messvorrichtung von der dem Stellventil abgewandten Seite auf den Messteller drückt. Mit anderen Worten ist das gegen die Oberkante des Ventilstößels des Stellventils drückende Ende des Messstößels flächiger als der übrige Messstößel und vorzugsweise kreisrund ausgebildet, sodass sich dem Federelement zugewandt zumindest abschnittsweise ein radialer Rand des Messstößels ausbildet, an welchem ein Ende des Federelements anliegen und hier eine Kraft auf der Messstößel ausüben kann. Dies kann eine besonders einfache drückende Verbindung zwischen Federelement und Messstößel entlang der Längsachse ermöglichen.

Vorzugsweise stützt sich das Federelement der Messvorrichtung randseitig an der Durchgangsöffnung des Gehäuses ab. Mit anderen Worten weist die Durchgangsöffnung des Gehäuses um den Messstößel herum zumindest abschnittsweise einen zum Messstößel hin zeigenden Rand bzw. Vorsprung auf, an welchem sich das entsprechende Ende des Federelements abstützen und von hier entlang der Längsachse eine Kraft auf den Messstößel ausüben kann. Dies kann eine besonders einfache drückende Verbindung zwischen Federelement und Gehäuse entlang der Längsachse ermöglichen.

Vorzugsweise ist das Federelement der Messvorrichtung als Spiralfeder um den Messstößel herum angeordnet. Dies kann eine besonders einfache, kostengünstige sowie bauraumsparende aber wirkungsvolle Umsetzung eines Federelements wie zuvor beschrieben ermöglichen.

Gemäß einem weiteren Aspekt der Erfindung ist das Gehäuse ausgebildet, direkt oder indirekt derart an dem Stellventil gehalten zu werden, so dass die Längsachse des Messstößels einer Längsachse des Ventilstößels des Stellventils entspricht. Mit anderen Worten fallen die Längsachse des Messstößels der Messvorrichtung und die Längsachse des Ventilstößels des Stellventils im montierten Zustand zusammen. Dies kann eine kompakte Bauweise der Messvorrichtung sowie eine kompakte Anordnung der Messvorrichtung auf dem Stellventil begünstigen. Auch kann hierdurch eine direkte Kraftübertragung zwischen Messstößel und Ventilstößel erfolgen, wodurch auch ein Verkanten oder Verbiegen quer zur Längsachse vermieden werden kann, was die Bestimmung des Schließmaßes beeinträchtigen könnte.

Erfindungsgemäß ist das Schließmaß des Stellventils bei geschlossenem Stellventil der Abstand entlang der Längsachse zwischen der Oberkante des Ventilstößels des Stellventils und einer Auflagefläche eines Anschlussgewindes des Stellventils. Hierdurch kann insbesondere ein Schließmaß wie eingangs beschrieben bestimmt werden.

Gemäß einem weiteren Aspekt der Erfindung weist das Gehäuse ein Gewinde auf, welches ausgebildet ist, mit einem ersten Gewinde eines Adapters verschraubt zu werden. Hierdurch kann die Messvorrichtung mit einem entsprechenden Adapter durch Verschrauben verbunden werden, wie es der späteren Montage des entsprechenden Stellantriebs auf dem Adapter entspricht. Dabei muss der Adapter seinerseits mit dem Stellventil verbunden werden, wie weiter unten näher beschrieben werden wird. Somit erfolgt eine indirekte Montage der Messvorrichtung auf dem Stellventil, da der Adapter dazwischen angeordnet ist.

Gemäß einem weiteren Aspekt der Erfindung weist das Gehäuse ein Gewinde auf, welches ausgebildet ist, mit einem Anschlussgewinde des Stellventils verschraubt zu werden. Somit kann eine direkte Montage der Messvorrichtung auf dem Stellventil erfolgen, sodass die Verwendung eines Adapters wie zuvor beschrieben vermieden werden kann. Dafür ist jedoch die Messvorrichtung auf das entsprechende Gewinde des Stellventils auszulegen, was zu einer entsprechend großen Variantenvielfalt erfindungsgemäßer Messvorrichtungen führen kann.

Offenbart, aber nicht als solches beansprucht wird ein Adapter zur Verbindung einer Messvorrichtung wie zuvor beschrieben mit einem Stellventil eines Heizkreisverteilers oder eines Radiators, wobei der Adapter entlang der Längsachse eine erste Aufnahme zum Halten der Messvorrichtung und der ersten Aufnahme abgewandt eine zweite Aufnahme aufweist, um an dem Stellventil gehalten zu werden. Hierdurch kann, wie zuvor bereits erwähnt, eine indirekte Montage einer erfindungsgemäßen Messvorrichtung auf dem entsprechenden Stellventil erfolgen, wobei durch unterschiedliche Adapter eine Anpassung einer einheitlichen Messvorrichtung an unterschiedliche Gewinde von Stellventilen unterschiedlicher Hersteller erfolgen kann. Dies führt zu einer entsprechend großen Variantenvielfalt derartiger Adapter.

Vorzugsweise ist die erste Aufnahme ein erstes Gewinde und bzw. oder die zweite Aufnahme ein zweites Gewinde. Dies kann eine besonders einfache Möglichkeit darstellen, die jeweilige Verbindung zwischen Messvorrichtung und Adapter und bzw. oder zwischen Adapter und Stellventil umzusetzen.

Vorzugsweise entspricht die Längsachse des Adapters der Längsachse des Messstößels der Messvorrichtung und bzw. oder der Längsachse des Ventilstößels des Stellventils. Mit anderen Worten fallen die jeweiligen Längsachsen im montierten Zustand zusammen. Dies kann eine kompakte Bauweise des Adapters sowie eine kompakte Anordnung des Adapters auf dem Stellventil begünstigen. Auch kann hierdurch eine direkte Kraftübertragung zwischen Adapter und Stellventil erfolgen, wodurch auch ein Verkanten oder Verbiegen quer zur Längsachse vermieden werden kann, was die Bestimmung des Schließmaßes beeinträchtigen könnte.

Die vorliegende Erfindung betrifft auch ein Messsystem zur Bestimmung eines Schließmaßes eines Stellventils eines Heizkreisverteilers oder eines Radiators mit einer Messvorrichtung wie zuvor beschrieben und mit wenigstens einem Adapter, vorzugsweise einer Mehrzahl unterschiedlicher Adapter, wie zuvor beschrieben. Hierdurch kann ein Messsystem mit Messvorrichtung und Adapter zur Verfügung gestellt werden, um eine indirekte Montage der Messvorrichtung auf dem Stellventil mittels des Adapters zu ermöglichen. Wird dabei eine Mehrzahl unterschiedlicher Adapter, welche jeweils mit der Messvorrichtung aber mit unterschiedlichen Typen von Stellventilen verwendet werden können, verwendet, so kann dies die Flexibilität der Verwendung der Messvorrichtung mit verschiedenen Stellventilen erhöhen bzw. ermöglichen. In nicht beanspruchten Anwendungsbeispielen können die Adapter für sich alleine von einer Person dazu verwendet werden, die Maße eines Stellventils zu bestimmen. Hierzu kann das jeweilige Maß wie beispielsweise ein Gewindedurchmesser und bzw. oder eine Gewindesteigung auf dem jeweiligen Adapter ablesbar sein.

Die vorliegende Erfindung betrifft auch ein Verfahren zur Bestimmung eines Schließmaßes eines Stellventils eines Heizkreisverteilers oder eines Radiators mittels einer Messvorrichtung, vorzugsweise mittels einer Messvorrichtung wie zuvor beschrieben, oder vorzugsweise mittels eines Messsystems wie zuvor beschrieben, wobei die Messvorrichtung einen Messstößel aufweist, welcher entlang einer Längsachse beweglich ausgebildet ist, und wobei ein dem Stellventil gegenüberliegendes Ende des Messstößels ausgebildet ist, das Schließmaß des Stellventils gegenüber einem Bezugspunkt zu bestimmen, vorzugsweise mittels einer Messskala gegenüber dem Bezugspunkt anzuzeigen, wobei das Schließmaß des Stellventils bei geschlossenem Stellventil der Abstand entlang der Längsachse zwischen der Oberkante des Ventilstößels des Stellventils und einer Auflagefläche eines Anschlussgewindes des Stellventils, wobei das Verfahren wenigstens die folgenden Schritte aufweist:
- Verwenden der Messvorrichtung am Stellventil, so dass das Schließmaß des Stellventils vom Messstößel gegenüber dem Bezugspunkt bestimmt wird,
- Erfassen des dem Stellventil gegenüberliegenden Endes des Messstößels zumindest abschnittweise und den Bezugspunkt mittels einer optischen Bilderfassungseinheit einer Rechnereinheit, vorzugsweise eines mobilen Endgeräts, und
- Ermitteln des Schließmaßes aus den optisch erfassten Bilddaten mittels einer Steuerungseinheit der Rechnereinheit.

Mit anderen Worten kann auf diese Art und Weise eine Unterstützung für einen Benutzer geschaffen werden, um das Schließmaß eines Stellventils mittels der Unterstützung einer Rechnereinheit zu ermitteln. Diese Unterstützung bzw. dieses Verfahren kann auf die zuvor beschriebene Messvorrichtung bzw. auf das zuvor beschriebene Messsystem angewendet werden aber auch auf andere Messvorrichtungen bzw. Messsysteme, welche ebenfalls einen Messstößel und einen Bezugspunkt verwenden, um das Schließmaß des Stellventils durch deren relative Positionierung zu bestimmen. Hierzu können seitens der Steuerungseinheit der Rechnereinheit bekannte Verfahren bzw. Algorithmen der Bildverarbeitung und Mustererkennung verwendet werden.

In jedem Fall kann dem Benutzer das Ermitteln des Schließmaßes abgenommen werden, indem entsprechend optische Bilddaten erfasst und hinsichtlich des Schließmaßes ausgewertet werden, wobei das Ergebnis der Auswertung bzw. des Ermittelns beispielsweise akustisch, haptisch und bzw. oder optisch ausgegeben werden kann, d.h. insbesondere mittels Sprachausgabe, mittels Vibration und bzw. oder mittels optisch ablesbarer Information dem Benutzer mitgeteilt werden kann.

Hierzu als Rechnereinheit ein mobiles Endgerät zu verwenden kann die Umsetzung vereinfachen bzw. den Komfort und die Verfügbarkeit der Nutzung des erfindungsgemäßen Verfahrens für den Benutzer erhöhen.

Ein Ausführungsbeispiel und weitere Vorteile der Erfindung werden nachstehend im Zusammenhang mit den folgenden Figuren rein schematisch dargestellt und näher erläutert. Darin zeigt:
- Figur 1: eine schematische Schnittdarstellung eines Stellventils eines Heizkreisverteilers gemäß dem Stand der Technik;
- Figur 2: eine schematische Schnittdarstellung des Stellventils der Figur 1 mit montiertem erfindungsgemäßen Adapter und montierter erfindungsgemäßer Messvorrichtung; und

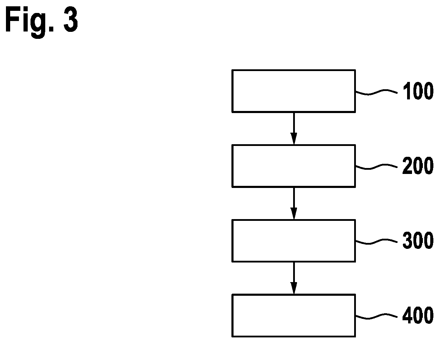

- Figur 3: ein Ablaufdiagramm eines erfindungsgemäßen Verfahrens.

Die o.g. Figuren werden in zylindrischen Koordinaten betrachtet. Es erstreckt sich eine Längsachse X. Senkrecht zur Längsachse X erstreckt sich eine radiale Richtung R von der Längsachse X weg. Senkrecht zur radialen Richtung R und um die Längsachse X herum erstreckt sich eine Umfangsrichtung U.

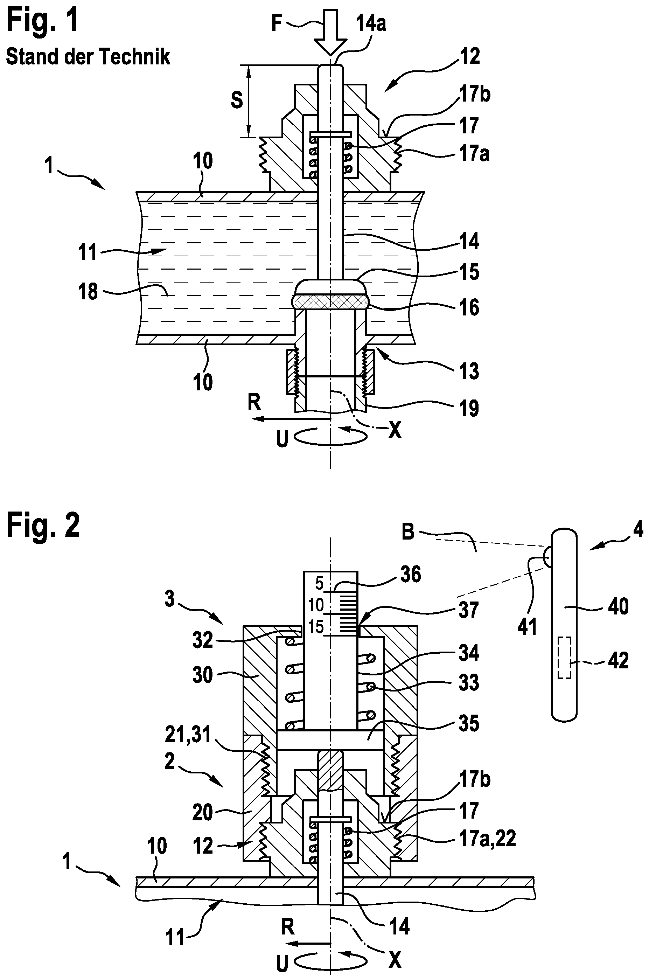

Figur 1 zeigt einen Fluidverteiler 1 in Form eines Heizkreisverteilers 1 einer Heizungsanlage. Der Heizkreisverteiler 1 weist eine Wandung 10 auf, welche einen Innenraum 11 als Innenvolumen 11 umschließt. Innerhalb des Innenraums 11 befindet sich ein Fluid 18 in Form von Heizungswasser 18.

Der Heizkreisverteiler 1 weist mehrere Stellventile 12 auf, welche nebeneinander angeordnet sind und von denen lediglich ein Stellventil 12 in der Figur 1 dargestellt ist. Das Stellventil 12 weist einen Leitungsanschluss 13 auf, welcher in der Darstellung der Figur 1 nach unten hin durch die Wandung 10 des Heizkreisverteilers 1 hindurchführt. Am unteren bzw. äußeren Ende des Leitungsanschlusses 13 ist eine Fluidleitung 19 in Form eines Rohrs 19 angeschlossen. Das Stellventil 12 weist einen Ventilstößel 14 in Form eines zylindrischen Stabes auf, welcher durch das Heizungswasser 18 hindurchgeführt wird und sich an seinem unteren, dem Leitungsanschluss 13 zugewandten Ende zu einem kreisrunden Ventilteller 15 radial aufweitet. Dem Leitungsanschluss 13 zugewandt weist der Ventilteller 15 randseitig eine ringförmige Ventildichtung 16 aus einem elastischen Material auf.

Außerhalb der Wandung 10 des Heizkreisverteilers 1 ist das Stellventil 12 derart von außen auf der Wandung 10 feststehend angeordnet, dass sich der Ventilstößel 14 entlang der Längsachse X durch das Stellventil 12 durch und mit seiner Oberkante 14a nach oben aus dem Stellventil 12 heraus erstreckt. Innerhalb des Stellventils 12 ist eine Rückstellfeder 17 als Ventilfeder 17 angeordnet und derart mit dem Stellventil 12 und dem Ventilstößel 14 verbunden, dass der Ventilstößel 14 entlang der Längsachse X von der Federkraft F der Rückstellfeder 17 vom Leitungsanschluss 13 weg bewegt werden und der Leitungsanschlusses 13 somit fluidführend geöffnet werden kann. Wird seitens einer Druckfeder eines Stellantriebs (nicht dargestellt) eine höhere Federkraft entlang der Längsachse X über die Oberkante 14a auf den Ventilstößel 14 aufgebracht und der Ventilstößel 14 vollständig auf dem Leitungsanschluss 13 gedrückt, sodass der Ventilteller 15 mit der Ventildichtung 16 den Leitungsanschluss 13 fluiddicht abdichtet, wie in der Figur 1 dargestellt, so kann hierdurch ein Fließen des Heizungswassers 18 in das Rohr 19 vollständig unterbunden werden.

Um nun ein Stellantrieb zur Betätigung des Stellventils 12 derart verwenden zu können, dass der Stellantrieb mittels der Federkraft einer Druckfeder den Ventilstößel 14 wie zuvor beschrieben vollständig fluiddicht auf den Leitungsanschlusses 13 drückt, muss das Schließmaß S des Stellventils 12 bekannt sein, welches im vollständig geschlossenen Zustand der Figur 1 dem Abstand entlang der Längsachse X zwischen der Oberkante 14a des Ventilstößels 14 der Stellventils 12 und einer Auflagefläche 17b eines Anschlussgewinde 17a der Stellventils 12 entspricht.

Erfindungsgemäß wird hierzu zunächst ein Adapter 2 in Form eines Adapterrings 2, welcher als einstückiger Adapterkörper 20 ausgebildet ist, mit einer zweiten Aufnahme 22 in Form eines zweiten Gewindes 22 als Innengewinde entlang der Längsachse X auf das Anschlussgewinde 17a der Stellventils 12 als Außengewinde aufgeschraubt. Dabei können unterschiedliche Adapter 2 verwendet werden, um jeweils auf ein Stellventil 12 eines unterschiedlichen Typs eines unterschiedlichen Herstellers aufgeschraubt zu werden, was bei Kenntnis der Maße des verwendeten Adapters 2 auch der Bestimmung der Maße des Stellventils 12 dienen kann.

Entlang der Längsachse X dem zweiten Gewinde 22, welches auch als Ventilgewinde 22 des Adapters 2 bezeichnet werden kann, gegenüberliegend ist seitens des Adapterkörpers 20 eine erste Aufnahme 21 in Form eines ersten Gewindes 21 als Innengewinde vorgesehen, welche jeweils einheitlich bzw. identisch ausgebildet und an eine erfindungsgemäße Messvorrichtung 3 angepasst ist. Auf diese Art und Weise kann die Messvorrichtung 3 mit Stellventilen 12 unterschiedlicher Typen unterschiedlicher Hersteller verwendet werden, ohne an dessen Anschlussgewinde 17a angepasst werden zu müssen, da dies seitens des Ventilgewindes 22 des Adapters 2 übernommen wird.

Die erfindungsgemäße Messvorrichtung 3, welche auch als Messkopf 3 bezeichnet werden kann, weist ein Gehäuse 30 auf, welches auch als Körper 30 bezeichnet werden kann. Das Gehäuse 30 ist im Wesentlichen zylindrisch um die Längsachse X herum ausgebildet und weist an seinem unteren Ende ein Gewinde 31 als Außengewinde auf, mit welchem das Gehäuse 30 mit dem ersten Gewinde 21 des Adapters verschraubt werden kann, weshalb das Gewinde 31 des Gehäuses 30 auch als Adaptergewinde 31 der Messvorrichtung 3 bezeichnet werden kann.

Innerhalb des Gehäuses 30 der Messvorrichtung 3 wird ein zylindrischer Innenraum (nicht bezeichnet) gebildet, welcher durch eine kreisrunde Durchgangsöffnung 32 entlang der Längsachse X nach oben hin offen ist. Innerhalb des Innenraums ist ein im Wesentlichen zylindrischer Messstößel 34 angeordnet, welche an seinem entlang der Längsachse X unteren Ende als kreisrunder Messstelle 35 ausgebildet ist. Um den zylindrischen mittleren Abschnitt des Messstößels 34 herum ist ein Federelement 33 in Form einer Spiralfeder 33 als Druckfeder 33 angeordnet, welche sich entlang der Längsachse X oben am inneren Rand der Durchgangsöffnung 32 abstützt und ihre Federkraft entlang der Längsachse X auf den Messstelle 35 ausübt, um diesen entlang der Längsachse X nach unten zu drücken. An seinem entlang der Längsachse X oberen, dem Messteller 35 gegenüberliegenden Ende weist der Messstößel 34 eine Messskala 36 auf, welche vergleichbar einem Meterstab, einem Lineal oder einem Metallmaßstab ausgebildet ist.

Durch die entsprechende Dimensionierung des Adapterkörpers 20 sowie der beiden Gewinde 21, 22 des Adapters 2 in Kombination mit der Dimensionierung des Gehäuses 30 sowie des Gewindes 31 der Messvorrichtung 3 und in Kombination mit der Dimensionierung der Druckfeder 33 und des Messstößels 34 schließt die Messskala 36 mit ihrem entlang der Längsachse X oberen Ende, welches das Maß "Null" markiert, genau mit der Oberkante des Gehäuses 13 bzw. der Durchgangsöffnung 32 als Bezugspunkt 37 der Messskala 36 ab, wenn die Messvorrichtung 3 nicht auf dem Adapter 2 montiert ist und somit die Druckfeder 33 die Messskala 36 maximal in den Innenraum des Gehäuses 30 hineinziehen kann.

Wird nun die Messvorrichtung 3 auf den Adapter 2 aufgeschraubt, so kommt die entlang der Längsachse X untere Seite des Messtellers 35 der Messvorrichtung 3 in Kontakt mit der Oberkante 14a des Ventilstößels 14 des Stellventils 12. Da die Druckfeder 33 der Messvorrichtung 3 eine höhere Federkraft als die Rückstellfeder 17 der Stellventils 12 besitzt, wird beim Aufschrauben der Messvorrichtung 3 auf den Adapter 2 der Ventilstößel 14 des Stellventils 12 vom Messstößel 34 der Messvorrichtung 3 zum Leitungsanschluss 13 hin gedrückt, bis im vollständig auf den Adapter 2 aufgeschraubten Zustand der Messvorrichtung 3 der Ventilstößel 14 den Leitungsanschlusses 13 vollständig abdichtet, wie bei Verwendung des Stellantriebs. Diese Stellung des Stellventils 12 kann als Schließpunkt bezeichnet werden.

Beim Aufschrauben wird dabei der Messstößel 34 entlang der Längsachse X vom vollständig eingedrückten, d.h. geschlossenen, Stellventil 12 genau so weit aus der Durchgangsöffnung 32 herausgedrückt, dass das Schließmaß S des Stellventils 12 dort an der Messskala 36 des Messstößels 34 abgelesen werden kann, wo der obere Rand des Gehäuses 30 bzw. der Durchgangsöffnung 32 als Bezugspunkt 37 auf der Höhe der Messskala 36 liegt, siehe Figur 2.

Durch die Verwendung der erfindungsgemäßen Messvorrichtung 3 in Kombination mit dem Adapter 2 als erfindungsgemäßes Messsystem 2, 3 kann auf einfache Art und Weise von einem Benutzer das Schließmaß S des Stellventils 12 bestimmt werden, welches bereits bei einem Heizkreisverteiler 1 verbaut ist und somit zur Bestimmung der Schließmaßes S nicht einzeln vermessen werden kann. Dies kann sehr einfach und intuitiv erfolgen.

Dies kann zum einen seitens des Benutzers direkt selbst erfolgen, indem der Benutzer das Schließmaß S des Stellventils 12 dort an der Messskala 36 des Messstößels 34 abliest, wo der obere Rand des Gehäuses 30 bzw. der Durchgangsöffnung 32 als Bezugspunkt 37 auf der Höhe der Messskala 36 liegt. Alternativ kann das Schließmaß S des Stellventils 12 vom Benutzer auch mittels einer Schieblehre am hervorragenden Messstößel 34 abgegriffen und an der Messskala der Schieblehre abgelesen werden.

Alternativ kann dies, insbesondere bei einem Messstößel 34 ohne Messskala 36, unter Zuhilfenahme einer Rechnereinheit 4 in Form eines mobilen Endgerätes 4 erfolgen, welches in der Figur 2 beispielhaft als Smartphone 4 oder als Tablet 4 dargestellt ist. Das mobile Endgerät 4 weist ein Gehäuse 40 auf, durch welches hindurch eine Bilderfassungseinheit 41 nach außen gerichtet ist. Innerhalb des Gehäuses 40 ist eine Steuerungseinheit 42 angeordnet, welche optische Bilddaten, welche von der Bilderfassungseinheit 41 in ihrem Bilderfassungsbereich B optisch erfasst wurden, erhalten und mittels bekannter Verfahren zur Mustererkennung und Bildverarbeitung verarbeiten und hinsichtlich des Schließmaßes S des Stellventils 12 auswerten kann, um dieses zu ermitteln. Hierzu kann die Steuerungseinheit 42 ein Verfahren wie folgt ausführen:
Der Benutzer kann nun, wie zuvor bereits beschrieben, als ein Verwenden 100 die Messvorrichtung 3 direkt oder indirekt am Stellventil 12 montieren, so dass das Schließmaß S des Stellventils 12 vom Messstößel 34 gegenüber dem Rand des Gehäuses 30 bzw. gegenüber der Durchgangsöffnung 32 als Bezugspunkt 37 bestimmt wird und vorzugsweise an der Messskala 36 ablesbar ist. Dies kann ebenso ohne Messskala 36 erfolgen, indem der Messstößel 36 entsprechend weit gegenüber der Durchgangsöffnung 32 als Bezugspunkt 37 entlang der Längsachse X hervorragt.

Dann kann der Benutzer als ein Erfassen 200 die optische Bilderfassungseinheit 41 des mobilen Endgeräts 4 mit dessen Bilderfassungsbereich B so auf den Messstößel 34 in voller Länge und den Bezugspunkt 37, falls keine Messskala 36 vorhanden ist, oder wenigstens auf den Abschnitt der Messskala 36 auf Höhe des Bezugspunktes 37, falls eine Messskala 36 vorhanden ist, richten und hiervon eine Aufnahme tätigen, wodurch entsprechende optische Bilddaten erfasst und zumindest temporär von einem Kurzzeitspeicher des mobilen Endgeräts 4 bzw. dessen Steuerungseinheit 42 bereitgestellt werden.

Jetzt kann mittels der Steuerungseinheit 42 der Rechnereinheit 4 ein Ermitteln 300 des Schließmaßes S aus den optisch erfassten Bilddaten erfolgen. Wird dabei die Messskala 36 verwendet, so kann mittels bekannter Bildverarbeitungs- und Musterkennungsverfahren die Skalierung der Messskale 36 in den erfassten optischen Bilddaten extrahiert und der entsprechende Wert der Messskala 36 auf Höhe des Bezugspunkts 37 erkannt werden, welcher in einen Zahlenwert umgewandelt werden kann. Wird keine Messskala 36 verwendet, so kann aus den erfassten optischen Bilddaten mittels bekannter Bildverarbeitungs- und Musterkennungsverfahren die Länge entlang der Längsachse zwischen dem Bezugspunkt 37 und dem oberen, dem Stellventil 12 gegenüberliegenden Ende des Messstößels 34 bestimmt und ebenfalls in einen Zahlenwert umgewandelt werden. Hierzu kann ggfs. der bekannte Durchmesser des Messstößels 34 als Bezugsgröße dienen, um die Länge entlang der Längsachse zwischen dem Bezugspunkt 37 und dem oberen, dem Stellventil 12 gegenüberliegenden Ende des Messstößels 34 in einen konkreten Zahlenwert umzurechnen.

In jedem Fall kann nun ein Ausgeben 400 des bestimmten Schließmaßes S als Zahlenwert an den Benutzer erfolgen, so dass dem Benutzer die Informationen des Schließmaßes S des verwendeten Stellventils 12 als Zahlenwert zur Verfügung gestellt und zum Einstellen des entsprechenden Stellantriebs verwendet werden kann. Dieses Ausgeben kann beispielsweise als Sprachausgabe und bzw. oder als Anzeige auf einem Display (nicht dargestellt) des mobilen Endgeräts 4 erfolgen.

### BEZUGSZEICHENLISTE

- B: Bilderfassungsbereich der Bilderfassungseinheit 41
- F: Federkraft der Rückstellfeder 17
- S: Schließmaß des Stellventils 12
- R: radiale Richtung
- U: Umfangsrichtung
- X: Längsachse
- 1: Fluidverteiler; Heizkreisverteiler
- 10: Wandung
- 11: Innenraum; Innenvolumen
- 12: Stellventil
- 13: Leitungsanschluss des Stellventils 12
- 14: Ventilstößel
- 14a: Oberkante des Ventilstößels 14
- 15: Ventilteller
- 16: Ventildichtung
- 17: Rückstellfeder; Ventilfeder
- 17a: Anschlussgewindes des Stellventils 12
- 17b: Auflagefläche des Anschlussgewindes 17a des Stellventils 12
- 18: Fluid; Heizungswasser
- 19: Fluidleitung; Rohr
- 2: Adapter; Adapterring
- 20: Adapterkörper
- 21: erste Aufnahme bzw. erstes Gewinde des Adapters 2; Stellantriebsgewinde des Adapters 2
- 22: zweite Aufnahme bzw. zweites Gewinde des Adapters 2; Ventilgewinde des Adapters 2
- 3: Messvorrichtung; Messkopf
- 30: Gehäuse; Körper
- 31: Gewinde der Messvorrichtung 3; Adaptergewinde der Messvorrichtung 3
- 32: Durchgangsöffnung
- 33: Federelement; Spiralfeder; Druckfeder
- 34: Messstößel
- 35: Messteller
- 36: Messskala
- 37: Bezugspunkt

- 4: Rechnereinheit; mobiles Endgerät; Smartphone; Tablet
- 40: Gehäuse
- 41: Bilderfassungseinheit
- 42: Steuerungseinheit

- 100: Verwenden der Messvorrichtung 3 am Stellventil 12
- 200: Erfassen des Messstößels 34 und des Bezugspunkts 37
- 300: Ermitteln des Schließmaßes S aus den optisch erfassten Bilddaten
- 400: Ausgeben des ermittelten Schließmaßes S

## Patentansprüche

1. Messvorrichtung (3) zur Bestimmung eines Schließmaßes (S) eines Stellventils (12) eines Heizkreisverteilers (1) oder eines Radiators,
mit einem Gehäuse (30), welches ausgebildet ist, direkt oder indirekt an dem Stellventil (12) gehalten zu werden,
mit einem Messstößel (34), welcher gegenüber dem Gehäuse (30) entlang einer Längsachse (X) beweglich ist, und
mit einem Federelement (33), welches ausgebildet ist, ein Ende des Messstößels (34) gegenüber dem Gehäuse (30) mit einer Messkraft gegen eine Oberkante (14a) eines Ventilstößels (14) des Stellventils (12) zu drücken,
wobei die Messkraft des Federelements (33) der Messvorrichtung (3) größer als eine Federkraft einer Rückstellfeder (17) des Stellventils (12) ist und
wobei ein gegenüberliegendes Ende des Messstößels (34) ausgebildet ist, das Schließmaß (S) des Stellventils (12) gegenüber einem Bezugspunkt (37) zu bestimmen,
wobei das Schließmaß (S) des Stellventils (12) bei geschlossenem Stellventil (12) der Abstand entlang der Längsachse (X) zwischen der Oberkante (14a) des Ventilstößels (14) des Stellventils (12) und einer Auflagefläche (17b) eines Anschlussgewindes (17a) des Stellventils (17) ist.

2. Messvorrichtung (3) nach Anspruchs 1, **dadurch gekennzeichnet, dass**
der Messstößel (34) innerhalb des Gehäuses (30) und durch eine Durchgangsöffnung (32) des Gehäuses (30) hindurch entlang der Längsachse (X) beweglich angeordnet ist.

3. Messvorrichtung (3) nach Anspruchs 1 oder 2, **dadurch gekennzeichnet, dass**
der Bezugspunkt (37) durch eine Oberkante des Gehäuses (30), vorzugsweise durch eine Oberkante der Durchgangsöffnung (32) des Gehäuses (30), gebildet wird.

4. Messvorrichtung (3) nach einem der vorangehenden Ansprüche, **dadurch gekennzeichnet, dass**
das gegenüberliegende Ende des Messstößels (34) eine Messskala (36) aufweist, welche ausgebildet ist, das Schließmaß (S) des Stellventils (12) gegenüber dem Bezugspunkt (37) anzuzeigen.

5. Messvorrichtung (3) nach einem der vorangehenden Ansprüche, **dadurch gekennzeichnet, dass**
das gegen die Oberkante (14a) des Ventilstößels (14) des Stellventils (12) drückende Ende des Messstößels (34) als Messteller (35) ausgebildet ist,
wobei das Federelement (33) der Messvorrichtung (3) von der dem Stellventil (12) abgewandten Seite auf den Messteller (35) drückt.

6. Messvorrichtung (3) nach einem der vorangehenden Ansprüche, **dadurch gekennzeichnet, dass**
das Gehäuse (30) ausgebildet ist, direkt oder indirekt derart an dem Stellventil (12) gehalten zu werden, so dass die Längsachse (X) des Messstößels (34) einer Längsachse (X) des Ventilstößels (14) des Stellventils (12) entspricht.

7. Messvorrichtung (3) nach einem der vorangehenden Ansprüche, **dadurch gekennzeichnet, dass**
das Gehäuse (30) ein Gewinde (31) aufweist, welches ausgebildet ist, mit einem ersten Gewinde (21) eines Adapters (2) verschraubt zu werden.

8. Messvorrichtung (3) nach einem der Ansprüche 1 bis 6, **dadurch gekennzeichnet, dass**
das Gehäuse (30) ein Gewinde (31) aufweist, welches ausgebildet ist, mit einem Anschlussgewinde (17a) des Stellventils (12) verschraubt zu werden.

9. Messsystem (2, 3) zur Bestimmung eines Schließmaßes (S) eines Stellventils (12) eines Heizkreisverteilers (1) oder eines Radiators
mit einer Messvorrichtung (3) gemäß einem der Ansprüche 1 bis 7 und
mit wenigstens einem Adapter (2), vorzugsweise einer Mehrzahl unterschiedlicher Adapter (2),
wobei der Adapter (2) entlang der Längsachse (X) eine erste Aufnahme (21) zum Halten der Messvorrichtung (3) und der ersten Aufnahme (21) abgewandt eine zweite Aufnahme (22) aufweist, um an dem Stellventil (12) gehalten zu werden,
wobei vorzugsweise die erste Aufnahme (21) ein erstes Gewinde (21) und/oder die zweite Aufnahme (22) ein zweites Gewinde (22) ist.

10. Verfahren zur Bestimmung eines Schließmaßes (S) eines Stellventils (12) eines Heizkreisverteilers (1) oder eines Radiators mittels einer Messvorrichtung (3), vorzugsweise mittels einer Messvorrichtung (3) nach einem der Ansprüche 1 bis 8, oder
vorzugsweise mittels eines Messsystems (2, 3) nach Anspruch 9,
wobei die Messvorrichtung (3) einen Messstößel (34) aufweist, welcher entlang einer Längsachse (X) beweglich ausgebildet ist, und
wobei ein dem Stellventil (12) gegenüberliegendes Ende des Messstößels (34) ausgebildet ist, das Schließmaß (S) des Stellventils (12) gegenüber einem Bezugspunkt (37) zu bestimmen, vorzugsweise mittels einer Messskala (36) gegenüber dem Bezugspunkt (37) anzuzeigen,
wobei das Schließmaß (S) des Stellventils (12) bei geschlossenem Stellventil (12) der Abstand entlang der Längsachse (X) zwischen einer Oberkante (14a) eines Ventilstößels (14) des Stellventils (12) und einer Auflagefläche (17b) eines Anschlussgewindes (17a) des Stellventils (17) ist,
wobei das Verfahren wenigstens die folgenden Schritte aufweist:
• Verwenden (100) der Messvorrichtung (3) am Stellventil (12), so dass das Schließmaß (S) des Stellventils (12) vom Messstößel (34) gegenüber dem Bezugspunkt (37) bestimmt wird,
• Erfassen (200) des dem Stellventil (12) gegenüberliegenden Endes des Messstößels (34) zumindest abschnittweise und den Bezugspunkt (37) mittels einer optischen Bilderfassungseinheit (41) einer Rechnereinheit (4), vorzugsweise eines mobilen Endgeräts (4), und
• Ermitteln (300) des Schließmaßes (S) aus den optisch erfassten Bilddaten mittels einer Steuerungseinheit (42) der Rechnereinheit (4).

## Claims

1. Measuring device (3) for determining a closing dimension (S) of a control valve (12) of a heating circuit distributor (1) or of a radiator,
comprising a housing (30) which is designed to be held directly or indirectly on the control valve (12),
comprising a measuring plunger (34) which is movable relative to the housing (30) along a longitudinal axis (X), and
comprising a spring element (33) which is designed to press an end of the measuring plunger (34) against the housing (30) with a measuring force against an upper edge (14a) of a valve plunger (14) of the control valve (12),
wherein the measuring force of the spring element (33) of the measuring device (3) is greater than a spring force of a return spring (17) of the control valve (12) and
wherein an opposite end of the measuring plunger (34) is designed to determine the closing dimension (S) of the control valve (12) relative to a reference point (37),
wherein the closing dimension (S) of the control valve (12) when the control valve (12) is closed is the distance along the longitudinal axis (X) between the upper edge (14a) of the valve plunger (14) of the control valve (12) and a bearing surface (17b) of a connection thread (17a) of the control valve (17).

2. Measuring device (3) according to claim 1, **characterized in that**
the measuring plunger (34) is movably arranged inside the housing (30) and through a through-opening (32) of the housing (30) along the longitudinal axis (X).

3. Measuring device (3) according to claim 1 or claim 2,
**characterized in that**
the reference point (37) is formed by an upper edge of the housing (30), preferably by an upper edge of the through-opening (32) of the housing (30).

4. Measuring device (3) according to any of the preceding claims,
**characterized in that**
the opposite end of the measuring plunger (34) has a measuring scale (36) which is designed to indicate the closing dimension (S) of the control valve (12) relative to the reference point (37).

5. Measuring device (3) according to any of the preceding claims,
**characterized in that**
the end of the measuring plunger (34) that presses against the upper edge (14a) of the valve plunger (14) of the control valve (12) is designed as a measuring plate (35),
the spring element (33) of the measuring device (3) pressing on the measuring plate (35) from the side facing away from the control valve (12).

6. Measuring device (3) according to any of the preceding claims,
**characterized in that**
the housing (30) is designed to be held directly or indirectly on the control valve (12) such that the longitudinal axis (X) of the measuring plunger (34) corresponds to a longitudinal axis (X) of the valve plunger (14) of the control valve (12).

7. Measuring device (3) according to any of the preceding claims,
**characterized in that**
the housing (30) has a thread (31) which is designed to be screwed to a first thread (21) of an adapter (2).

8. Measuring device (3) according to any of claims 1 to 6,
**characterized in that**
the housing (30) has a thread (31) which is designed to be screwed to a connection thread (17a) of the control valve (12).

9. Measuring system (2, 3) for determining a closing dimension (S) of a control valve (12) of a heating circuit distributor (1) or of a radiator
comprising a measuring device (3) according to any of claims 1 to 7, and
comprising at least one adapter (2), preferably a plurality of different adapters (2),
wherein the adapter (2) has a first receptacle (21) along the longitudinal axis (X) for holding the measuring device (3) and a second receptacle (22) facing away from the first receptacle (21) in order to be held on the control valve (12),
wherein preferably the first receptacle (21) is a first thread (21) and/or the second receptacle (22) is a second thread (22).

10. Method for determining a closing dimension (S) of a control valve (12) of a heating circuit distributor (1) or of a radiator by means of a measuring device (3), preferably by means of a measuring device (3) according to any of claims 1 to 8, or
preferably by means of a measuring system (2, 3) according to claim 9,
wherein the measuring device (3) has a measuring plunger (34) which is designed to be movable along a longitudinal axis (X), and
wherein an end of the measuring plunger (34) opposite the control valve (12) is designed to determine the closing dimension (S) of the control valve (12) relative to a reference point (37), preferably to indicate by means of a measuring scale (36) relative to the reference point (37),
wherein the closing dimension (S) of the control valve (12) when the control valve (12) is closed is the distance along the longitudinal axis (X) between an upper edge (14a) of a valve plunger (14) of the control valve (12) and a bearing surface (17b) of a connection thread (17a) of the control valve (17),
wherein the method comprises at least the following steps:
• using (100) the measuring device (3) on the control valve (12) so that the closing dimension (S) of the control valve (12) is determined by the measuring plunger (34) relative to the reference point (37),
• capturing (200) the end of the measuring plunger (34) opposite the control valve (12) at least portion by portion and the reference point (37) by means of an optical image capture unit (41) of a computer unit (4), preferably a mobile terminal (4), and
• ascertaining (300) the closing dimension (S) from the optically captured image data by means of a control unit (42) of the computer unit (4).

## Revendications

1. Dispositif de mesure (3) permettant de déterminer une hauteur de fermeture (S) d'une vanne de réglage (12) d'un distributeur de circuit de chauffage (1) ou d'un radiateur,
comportant un boîtier (30) qui est conçu pour être maintenu directement ou indirectement sur la vanne de réglage (12),
comportant un poussoir de mesure (34) qui est mobile par rapport au boîtier (30) le long d'un axe longitudinal (X), et
comportant un élément formant ressort (33) qui est conçu pour presser une extrémité du poussoir de mesure (34) par rapport au boîtier (30) avec une force de mesure contre un bord supérieur (14a) d'un poussoir de vanne (14) de la vanne de réglage (12),
dans lequel la force de mesure de l'élément formant ressort (33) du dispositif de mesure (3) est supérieure à une force de ressort d'un ressort de rappel (17) de la vanne de réglage (12) et
dans lequel une extrémité opposée du poussoir de mesure (34) est conçue pour déterminer la hauteur de fermeture (S) de la vanne de réglage (12) par rapport à un point de référence (37),
dans lequel la hauteur de fermeture (S) de la vanne de réglage (12) lorsque la vanne de réglage (12) est fermée est la distance le long de l'axe longitudinal (X) entre le bord supérieur (14a) du poussoir de vanne (14) de la vanne de réglage (12) et une surface d'appui (17b) d'un filetage de raccordement (17a) de la vanne de réglage (17).

2. Dispositif de mesure (3) selon la revendication 1, **caractérisé en ce que**
le poussoir de mesure (34) est disposé à l'intérieur du boîtier (30) de manière à être mobile le long de l'axe longitudinal (X) à travers une ouverture de passage (32) du boîtier (30).

3. Dispositif de mesure (3) selon la revendication 1 ou 2, **caractérisé en ce que**
le point de référence (37) est formé par un bord supérieur du boîtier (30), de préférence par un bord supérieur de l'ouverture de passage (32) du boîtier (30).

4. Dispositif de mesure (3) selon l'une des revendications précédentes,
**caractérisé en ce que**
l'extrémité opposée du poussoir de mesure (34) présente une échelle de mesure (36) qui est conçue pour indiquer la hauteur de fermeture (S) de la vanne de réglage (12) par rapport au point de référence (37).

5. Dispositif de mesure (3) selon l'une des revendications précédentes,
**caractérisé en ce que**
l'extrémité du poussoir de mesure (34) appuyant contre le bord supérieur (14a) du poussoir de vanne (14) de la vanne de réglage (12) est conçue comme un plateau de mesure (35),
dans lequel l'élément formant ressort (33) du dispositif de mesure (3) appuie sur le plateau de mesure (35) depuis le côté opposé à la vanne de réglage (12).

6. Dispositif de mesure (3) selon l'une des revendications précédentes,
**caractérisé en ce que**
le boîtier (30) est conçu pour être maintenu directement ou indirectement sur la vanne de réglage (12) de telle sorte que l'axe longitudinal (X) du poussoir de mesure (34) correspond à un axe longitudinal (X) du poussoir de vanne (14) de la vanne de réglage (12).

7. Dispositif de mesure (3) selon l'une des revendications précédentes,
**caractérisé en ce que**
le boîtier (30) présente un filetage (31) qui est conçu pour être vissé avec un premier filetage (21) d'un adaptateur (2).

8. Dispositif de mesure (3) selon l'une des revendications 1 à 6,
**caractérisé en ce que**
le boîtier (30) présente un filetage (31) qui est conçu pour être vissé avec un filetage de raccordement (17a) de la vanne de réglage (12).

9. Système de mesure (2, 3) permettant de déterminer une hauteur de fermeture (S) d'une vanne de réglage (12) d'un distributeur de circuit de chauffage (1) ou d'un radiateur
comportant un dispositif de mesure (3) conformément à l'une des revendications 1 à 7 et
comportant au moins un adaptateur (2), de préférence une pluralité d'adaptateurs (2) différents,
dans lequel l'adaptateur (2) présente, le long de l'axe longitudinal (X), un premier logement (21) permettant de maintenir le dispositif de mesure (3) et, à l'opposé du premier logement (21), un second logement (22) pour être maintenu sur la vanne de réglage (12),
dans lequel, de préférence, le premier logement (21) est un premier filetage (21) et/ou le second logement (22) est un second filetage (22).

10. Procédé permettant de déterminer une hauteur de fermeture (S) d'une vanne de réglage (12) d'un distributeur de circuit de chauffage (1) ou d'un radiateur au moyen d'un dispositif de mesure (3), de préférence au moyen d'un dispositif de mesure (3) selon l'une des revendications 1 à 8, ou
de préférence au moyen d'un système de mesure (2, 3) selon la revendication 9,
dans lequel le dispositif de mesure (3) présente un poussoir de mesure (34) qui est conçu de manière à être mobile le long d'un axe longitudinal (X), et
dans lequel une extrémité du poussoir de mesure (34) opposée à la vanne de réglage (12) est conçue pour déterminer la hauteur de fermeture (S) de la vanne de réglage (12) par rapport à un point de référence (37), de préférence pour l'indiquer par rapport au point de référence (37) au moyen d'une échelle de mesure (36),
dans lequel la hauteur de fermeture (S) de la vanne de réglage (12) lorsque la vanne de réglage (12) est fermée est la distance le long de l'axe longitudinal (X) entre un bord supérieur (14a) d'un poussoir de vanne (14) de la vanne de réglage (12) et une surface d'appui (17b) d'un filetage de raccordement (17a) de la vanne de réglage (17),
dans lequel le procédé présente au moins les étapes suivantes :
• utilisation (100) du dispositif de mesure (3) sur la vanne de réglage (12), de sorte que la hauteur de fermeture (S) de la vanne de réglage (12) par rapport au point de référence (37) est déterminée par le poussoir de mesure (34),
• détection (200) de l'extrémité du poussoir de mesure (34) opposée à la vanne de réglage (12) au moins dans certaines sections et du point de référence (37) au moyen d'une unité de détection d'image optique (41) d'une unité de calcul (4), de préférence d'un terminal mobile (4), et
• définition (300) de la hauteur de fermeture (S) à partir des données d'image détectées optiquement au moyen d'une unité de commande (42) de l'unité de calcul (4).
